# EUROPÄISCHE PATENTSCHRIFT

(11) **EP 2 749 921 B1**
(45) Veröffentlichungstag und Bekanntmachung des Hinweises auf die Patenterteilung: **15.01.2020**
(21) Anmeldenummer: 13405144.0
(22) Anmeldetag: 30.12.2013
(51) Int. Cl.: G02B 6/44

(54) **Verteileinrichtung für Lichtwellenleiter**
Distributor device for fibre optic cables
Dispositif de répartition pour guide à fibres optiques

(30) Priorität: 31.12.2012 CH 30012012
(43) Veröffentlichungstag der Anmeldung: 02.07.2014
(73) Patentinhaber: odasys AG, 8105 Regensdorf (CH)
(72) Erfinder: Illi, Walter, 8107 Buchs ZH (CH)
(74) Vertreter: Frei Patent Attorneys

(56) Entgegenhaltungen:
- EP-A2- 0 369 524
- WO-A1-2009/009219
- DE-C1- 4 308 228
- US-A1- 2006 210 229
- US-A1- 2007 031 100
- US-A1- 2009 245 743
- US-A1- 2009 245 746
- US-A1- 2010 296 791
- US-A1- 2012 189 261

## Beschreibung

Die Erfindung bezieht sich auf das Gebiet der Kommunikations- und Datenkabelsysteme basierend auf Lichtwellenleiter, insbesondere Glasfasern. Die Erfindung betrifft eine Einrichtung zur Verteilung von Kommunikations-und Datenleitungen in einem Gebäude mit einer Kabelverbindung und einer Anschlussdose und mit einem Gebäudeverteiler zur Herstellung einer Rangierung durch Verbinden von Lichtwellenleiterfasern eines eingehenden Lichtwellenleiterkabels mit Lichtwellenleiterfasern eines ausgehenden Lichtwellenleiterkabels gemäss dem Oberbegriff des Anspruchs 1.

Lichtwellenleiterkabel finden immer häufigeren Einsatz vor allem in der Telekommunikations-Technik, der Nachrichtenübermittlung per Telefon, Funk und Fernsehen und der Computertechnik.

Die Weiterführung der bekannten Lichtwellenleiter-Technologie zur Übertragung von Daten und Kommunikation via Lichtwellenleiter über Ortszentralen oder Verteiler bis in die einzelnen Haushalte bzw. Büros setzt entsprechende Anschlussdosen voraus, welche für Lichtwellenleiter geeignet sind. Solche Anschlussdosen enthalten entsprechende Steckanschlüsse zum Anschliessen eines Lichtwellenleiter-Kabels über eine Steckverbindung.

Das Verlegen von Lichtwellenleiterkabeln, insbesondere von Glasfaserkabeln, bis in die Wohnung des Teilnehmers bezeichnet man in der Telekommunikation auch als "FTTH". "FTTH" steht als Abkürzung für "Fiber To The Home".

Eine auf Lichtwellenleiterkabel, insbesondere auf Glasfaserkabel, basierende Netz-werkverkabelung innerhalb eines Gebäudes oder Campus bis zu den Netzwerkdosen in den einzelnen Arbeitsräumen, wie Büros, bezeichnet man in der Telekommunikation auch als "FTTD". "FTTD" steht als Abkürzung für "Fiber To The Desk".

Die hierzu notwendigen Anschlussdosen werden zum Beispiel als Wanddose an der Wand befestigt oder in Wandöffnungen eingebaut. Es ist im Weiteren auch bekannt, Anschlussdosen als Bodendosen in Unterfluranwendungen einzusetzen.

Lichtwellenleiter und Kupferkabel unterscheiden sich stark in ihrer Handhabung. So erfolgt das Zusammenfügen von Lichtwellenleitern mittels anderen Verfahren als bei Kupferkabeln. Während nämlich die Herstellung eines elektrischen Kontaktes zwischen zwei Kupferkabeln mit einfachen Mitteln möglich ist, ist die Herstellung einer genügenden optischen Verbindung zwischen zwei dünnen Lichtwellenleiterfasern mittels Spleisstechnologie wesentlich aufwändiger und diffiziler.

Ferner müssen Lichtwellenleiterkabel bzw. deren Fasern im Vergleich zu Kupferleitungen mit Mindestbiegeradien verlegt werden. Bei Unterschreiten eines bestimmten Biegeradius des Kabels bzw. der Faser kommt es zur Zerstörung oder Beschädigung der Lichtwellenleiterfasern oder die Dämpfungswerte können nicht gering genug gehalten werden, was zu Störungen beim Betrieb der angeschlossenen Geräte führt.

Ferner ist es auch wichtig, dass beim Verbinden von Lichtwellenleiterfasern eine gewisse Kabel- bzw. Faserreserve ausgebildet wird. Die Kabelreserve ist notwendig um genügend Flexibilität beim Anschliessen bzw. Verbinden des Kabels bzw. der Lichtwellenleiterfasern zu haben.

Eine Faserreserve ist ferner auch notwendig, damit die einzelne Faser eines Lichtwellenleiterkabels z. B. mit einem vorkonfektionierten Steckanschluss, einem so genannten "Pigtail", gespleisst werden kann. So muss z. B. die Spleissverbindung mittels eines Spleissgeräts ausserhalb des Aufnahmraums für die Spleissverbindung in einem Arbeitsbereich mit genügend Platz ausgeführt werden.

Im Weiteren ist die offen liegende, d.h. entmantelte Lichtwellenleiterfaser im Vergleich zu einem Kupferdraht besonders empfindlich auf mechanische Einwirkung. Daher sollte die Faser besonders gut geschützt in der Verteilereinrichtung untergebracht sein.

Insbesondere die Spleissung, welche zum Beispiel mit einem Spleissschutzelement umgeben ist, muss im Anschluss an die Spleissung besonders gut geschützt und z. B: in einer Spleissschutzhalterung fixiert werden. Dies ist wichtig, da die Faser im Bereich der Spleissung nicht mehr biegsam ist und daher bei mechanischer Beanspruchung leicht beschädigt werden kann.

Die Verkabelung von Kommunikations- oder Datenleitungen in Gebäuden ist von hoher Komplexität und setzt daher neben qualitativ einwandfreien Spleissverbindungen im Weiteren einen einheitlichen Aufbauplan für Verkabelungen für die unterschiedlichen Dienste, wie Sprache oder Daten, voraus. Man spricht in der Fachsprache auch von strukturierter Verkabelung.

Bei einer strukturierten Verkabelung bilden Verteilereinrichtungen, auch einfach Verteiler genannt, eine wichtige Komponente der Netzwerkinfrastruktur. Die Verteileinrichtung dient der Rangierung, d.h. der Verteilung von Kommunikations- und Datenkabeln in einem Gebäude.

Verteilereinrichtungen weisen in der Regel eine Frontseite mit einer Mehrzahl von Ports zur Herstellung lösbarer Leitungsverbindungen, insbesondere Steckverbindungen, auf.

Das Ziel der strukturierten Verkabelung mit einer Verteilereinrichtung ist es, eine gewisse Ordnung und Übersicht in die an sich komplexe Gebäudeverkabelung zu bringen. Ferner soll auch eine gewisse Flexibilität für nachträgliche Änderungen in der Verkabelungsstruktur gewährleistet sein. Dies Betrifft insbesondere Erweiterungen oder räumliche Veränderungen des Netzwerks. Ferner vereinfacht eine strukturierte Verkabelung auch die Reparatur beschädigter Netzwerkkompohenten, wie Netzwerkkabel. Die Eingriffe können bei einer strukturierten Verkabelung vorgenommen werden, ohne dass z. B. Kabelkanäle geöffnet und neue Netzwerckabel verlegt werden müssen.

Wie erwähnt, zeichnet sich eine Verteileinrichtung durch eine Mehrzahl von Ports in Form von lösbaren Anschlüsse aus. Die Ports erlauben das lösbare und insbesondere werkzeugfreie Anschliessen von Lichtwellenleiterkabeln, insbesondere von so genannen Patchkabeln. In der Regel handelt es sich bei den Ports um Steckanschlüsse, insbesondere um Steckbuchsen, in welche der korrespondierende Stecker des Patchkabels gesteckt wird.

Gemäss dem Stand der Technik sind Verteilereinrichtungen für Verkabelungen, welche auf Kupfer basieren, baukastenartig aufgebaut. Die Ports werden hier durch so genannte Patchfelder ausgebildet. Die Verteilereinrichtung umfasst dabei ein oder eine Mehrzahl solcher Patchfelder, welche z. B. lösbar in einem Trägerrahmen der Verteilereinrichtung montiert sind. Das Patchfeld wird durch ein Montagemodul mit einer Reihe von durchnummerierten Ports ausgebildet.

Die wesentliche Aufgabe von Patchfeldern besteht darin, eine Verbindung zwischen den starren Kabeln, die fest in den Wänden oder Kabelkanälen verlegt sind, und den flexiblen Patchkabeln herzustellen, welche wiederum eine Verbindung zu anderen Komponenten einer Netzwerkinfrastruktur herstellen.

Auf der Rückseite sind die Ports einer Verteilereinrichtung mit Kabeln versehen, die z. B. Kabelverbindungen zu anderen Patchfeldern oder zu fest installierten Anschlussdosen in einem Gebäude herstellen.

Das an einem Patchfeld angeschlossene Patchkabel kann z. B.:
- zur Verbindung von Ports eines ersten Patchfeld (auch Rangierfeldes genannt) mit Ports eines zweiten Patchfeldes;
- zur Verbindung von Ports eines Patchfelds mit einem Netzwerkverteilergerät (zum Beispiel Switch, Konverter oder Router)
- der Anbindung von Endgeräten (zum Beispiel Computer, Telefon, Fernseher, etc.) an eine Netzanschlussdose
dienen.

Bekannte Verteilereinrichtungen weisen jedoch unter anderem den Nachteil auf, dass ein Montagemodul in Form eines Patchfeldes eine Vielzahl von Ports für mehrere Anschlüsse bzw. Arbeitsplätze umfasst. Sind nun am Anschluss für einen Arbeitsplatz Unterhaltsarbeiten auszuführen, so muss das gesamte Patchfeld ausgebaut werden. Entsprechend sind auch die weiteren an diese Patchfeld angeschlossenen Arbeitsplätze von einem vorübergehenden Ausfall betroffen.

Die Publikationsschrift US 2010/0296791 A1 beschreibt ein Kabelmanagementmodul zur Aufnahme und Halterung von Lichtwellenleiterverbindungen. Das Kabelmanagementmodul ist Teil einer Verteilereinrichtung mit einem Gestell zur Aufnahme des Kabelmanagementmoduls.

Die Publikationsschrift WO 2009/009219 A1 beschreibt Kabelmanagementsystem für einen Verteilerschrank für die Telekommunikation. Der Verteilerschrank enthält Rangierfelder zur Verteilung von Netzwerkkabeln.

Die Publikationsschrift US 2009/0245746 A1 beschreibt ein Kabelmanagementmodul für eine Verteilereinrichtung mit einem Gehäuse und einer aus dem Gehäuse herausziehbaren Schublade. Das Kabelmanagementmodul enthält eine Mehrzahl von Ports.

Aufgabe vorliegender Erfindung ist es nun, eine Verteilereinrichtung für Lichtwellenleiterkabel zur Verfügung zu stellen, welche eine noch höhere Flexibilität im Rahmen einer strukturierten Verkabelung gewährleistet.

Eine weitere Aufgabe der Erfindung besteht darin, die Spieissverbindungen zwischen jeweils zwei Lichtwellenleiterfasern in der Verteilereinrichtung möglichst gut zu schützen.

Die Verteilereinrichtung zeichnet sich nun dadurch aus, dass diese:
- einen Montagerahmen, auch Trägerrahmen genannt,
- wenigstens einen im Montagerahmen befestigen Modulträger mit einer Mehrzahl von Aufnahmen für Anschlusseinschubmodule, und
- eine Mehrzahl von über Führungen in die Aufnahmen des Modulträgers eingeführte Anschlusseinschubmodule mit jeweils wenigstens einem Port enthält.

Der Montagerahmen kann zum Beispiel Teil eines Verteilerschranks oder Verteilerkastens sein.

Die Verteilereinrichtung ist ein Gebäudeverteiler. In der Verteilereinrichtung können Elemente der aktiven Netztechnik (zum Beispiel Switches, Konverter, oder Telefonanlagen untergebracht sein.

Dank der erfindungsgemässen Einrichtung zur Verteilung von Kommunikations- und Datenleitungen in einem Gebäude werden Etagenverteiler wie sie bis anhin in der strukturierten Gebäudeverkabelung eingesetzt wurden, hinfällig.

Der Montagerahmen bildet einen Aufnahmeraum für den wenigstens einen Modulträger aus. Der Modulträger ist insbesondere lösbar im Montagerahmen befestigt. Die Verbindung kann werkzeugfrei oder mit Werkzeug erfolgen. Die Verbindung ist zum Beispiel eine Schraubverbindung.

Der Montagerahmen sowie der Modulträger sind vorzugweise gemäss den gängigen Konstruktionsnormen ausgelegt. So weist die Aufnahme des Montagerahmens insbesondere eine 19 Zoll Normbreite auf. Entsprechend weist der Modulträger eine Frontseiten-Normbreite von 19 Zoll auf.

Die Höhe des Modulträgers orientiert sich insbesondere ebenfalls an der genormten Höheneinheit (HE) eines Baugruppenträgers, auch Rack genannt. Eine solche Höheneinheit beträgt rund 4.45 cm. Der Modulträger weist nun insbesondere eine Höhe von vier solchen Höheneinheiten auf.

Der Modulträger kann zum Beispiel von einer Frontseite, auch Vorderseite genannt, in den Montagerahmen eingeführt und an diesem befestigt werden. Der Modulträger kann z. B. eine Einbautiefe von 210 mm aufweisen.

Der Modulträger kann zum Beispiel in Einschubrichtung in den Montagerahmen eingeschoben werden. Hierzu können Modulträger und Montagerahmen eine Längs- bzw. eine Linearführung, insbesondere eine Gleitführung ausbilden.

Der Modulträger kann zum Beispiel über Gleitführungen am Montagerahmen, wie Gleitschienen, in diesen einschiebbar sein. Der Modulträger kann insbesondere schubladenartig in den Montagerahmen einschiebbar sein. Die Einschubrichtung des Modulträger verläuft insbesondere horizontal oder im Wesentlichen horizontal.

Die Verteilereinrichtung enthält insbesondere eine Mehrzahl von übereinander im Montagerahmen befestigte Modulträger. Die Verteilereinrichtung enthält insbesondere eine Mehrzahl von nebeneinander im Montagerahmen befestigte Modulträger.

Übereinander angeordnete Modulträger können über an der Frontseite der Verteilereinrichtung angebrachte Rangierpanele voneinander vertikal beabstandet sein. Die Rangierpanele können Kabelhalterungen aufnehmen und Kabeldurchführungen enthalten.

Der Modulträger enthält eine Mehrzahl von Aufnahmen zur Aufnahme von jeweils einem Anschlusseinschubmodul, nachfolgend vereinfacht Einschubmodule genannt. Die Einschubmodule werden auch als Spleissmodule benannt.

Es sind Aufnahmen zur Aufnahme von jeweils einem Einschubmodul nebeneinander angeordnet.

Es sind Aufnahmen zur Aufnahme von jeweils einem Einschubmodul übereinander angeordnet.

Die Aufnahmen können insbesondere übereinander in Kolonnen und nebeneinander in Reihen angeordnet sein.

Entsprechend sind auch die Einschubmodule in Kolonnen bzw. Reihen übereinander bzw. nebeneinander im Modulträger angeordnet.

Der Modulträger kann zum Beispiel sechs übereinander angeordnete Reihen von Einschubmodulen aufnehmen. Eine Kolonne umfasst entsprechend sechs Einschubmodule. Jede Reihe enthält z. B. zehn Einschubmodule, so dass der Modulträger insgesamt sechs mal zehn, also sechzig Einschubmodule umfasst. Der Modulträger enthält eine entsprechende Anzahl Aufnahmen.

Die Höhe des Modulträgers kann jedoch auch nur zwei der genannten Höheneinheiten umfassen. Entsprechend weist der Modulträger lediglich Kolonnen von jeweils drei Einschubmodulen bzw. Aufnahmen, also drei Reihen, auf.

Die Einschubmodule sind in eine Einschubrichtung in den Modulträger einschiebbar. Die Einschubrichtung entspricht insbesondere der Einschubrichtung des Modulträgers. Die Einschubrichtungen verlaufen insbesondere von vorne, das heisst von der Frontseite der Verteilereinrichtung, wo die Ports angeordnet sind, in Richtung der Rückseite der Verteilereinrichtung.

Die Einschubrichtung der Einschubmodule verläuft insbesondere horizontal oder im Wesentlichen horizontal.

Der Modulträger kann Längs- bzw. Linearführungen zum Einschieben der Einschubmodule in die jeweiligen Aufnahmen des Modulträgers aus. Die Längsführungen sind insbesondere als Gleitführungen ausgebildet. Diese können z. B. als Gleitkanäle oder Gleitleisten ausgebildet sein. Die Längsführungen sind insbesondere horizontal oder im Wesentlichen horizontal ausgebildet.

Der Modulträger ist insbesondere als Kasten, insbesondere als Kastenprofil, ausgebildet. Der Modulträger, insbesondere der kastenförmige Modulträger, enthält insbesondere vertikale Elemente, wie Profile, Wände oder Verbindungsstege, zwischen welchen die Aufnahmen für die Einschubmodule ausgebildet werden. Die Längsführungen sind insbesondere an die vertikalen Elemente angebracht oder integraler Bestandteil davon.

Die Längsführungen an den Vertikalelementen sind zum Beispiel als Führungsnuten ausgebildet. Wände mit Führungsnuten können in einem Tiefziehverfahren herstellt sein.

Der Modulträger kann einteilig oder mehrteilig gefertigt sein. Der Modulträger kann aus Metall, insbesondere aus einem Leichtmetall, wie Aluminium, oder aus Kunststoff sein oder aus einer Kombination der genannten Werkstoffe sein. Der Modulträger kann z. B. einteilig in einem Strangpressverfahren oder Giessverfahren bzw. Spritzgiessverfahren hergestellt sein. Der Modulträger kann insbesondere aus Blech und/oder Profilen hergestellt sein.

Das Einschubmodul enthält einen Grundkörper, ein Front-Panel zur Aufnahme der Ports, eine Spleissschutzhalterung zur Aufnahme der Spleissverbindungen zwischen den Lichtwellenleitern, sowie einen Aufnahmeraum zur Aufnahme einer Lichtwellenleiter-Reserve. Die Spleissung ist zum Beispiel von einem Spleissschutz umgeben.

Die Spleissschutzhalterung ist insbesondere drehbar am Grundkörper gelagert. Sie weist z. B. eine senkrecht zur Einschubrichtung und vorzugsweise parallel zur Gravitationsrichtung verlaufende Drehachse auf. Die Drehbarkeit erlaubt die Ausrichtung der Spleissschutzhalterung in einer Ebene, welche parallel zu den Windungen der Lichtwellenleiter-Reserve liegt. Die Spleissschutzhalterung ist z. B. zwischen dem Front-Panel und dem rückseitigen Abschluss bzw. einem Endteil angeordnet.

Der Aufnahmeraum wird beispielsweise durch den Grundkörper ausgebildet. Das Front-Panel kann integral mit dem Grundkörper verbunden sein. Das Front-Panel kann auch als separates Bauteil ausgebildet und lösbar (Formschluss) oder nicht lösbar (Formschluss, Stoffschluss) mit dem Grundkörper verbunden sein. Das Front-Panel kann z. B. eine Abmessung von 29,3 x 42,5 mm aufweisen. Die Einbautiefe des Einschubmoduls kann z. B. 210 mm betragen.

Der Grundkörper enthält einen Boden. Der Grundkörper kann ferner zwei Seitenwände enthalten. Der Boden, die Seitenwände und das Front-Panel begrenzen den Aufnahmeraum. Dieser ist daher insbesondere kanalförmig ausgebildet. Der Aufnahmeraum ist insbesondere in Montageposition gegen oben offen. Der Boden ist in Montageposition insbesondere horizontal oder im Wesentlichen horizontal ausgerichtet.

Der Aufnahmeraum bildet in Einschubrichtung betrachtet insbesondere zwei hintereinander angeordnete Aufnahmebereiche für jeweils eine Lichtwellenleiter-Reserve aus. Die beiden Aufnahmebereiche sind über die: Spleissschutzhalterung gegeneinander abgegrenzt.

Ein erster, zum Front-Panel hin angeordneter Aufnahmebereich dient vorzugsweise der Aufnahme der Lichtwellenleiter-Reserve eines vorkonfektionierten Steckanschlusses bzw. "Pigtails". Der zweite Aufnahmebereich dient vorzugsweise der Aufnahme der Lichtwellenleiter-Reserve eines von der Rückseite der Verteilereinrichtung zugeführten Lichtwellenleiterkabels.

Es ist jedoch auch möglich, dass die beiden Lichtwellenleiter-Reserven übergreifend in beiden Aufnahmebereichen abgelegt werden. Dies kann insbesondere dann der Fall sein, Wenn das Kupplungsteil, insbesondere der Steckverbinder, direkt an dem von aussen zugeführten Lichtwellenleiterkabel angebracht ist, d.h. wenn keine Spleissung zwischen zwei Lichtwellenleiterkabelabschnitten bzw. zwischen deren Einzelfasern vorgesehen ist.

Das Einschubmodul weist insbesondere Rückhalteelemente, z. B. in Form von Nasen, Zungen oder Stifte, auf welche im Abstand zum Boden über den Aufnahmeraum geführt sind. Die Rückhalteelemente sollen ein Entweichen der Lichtwellenleiter-Reserve nach oben durch die Aufnahmeöffnung verhindern. Die Rückhalteelemente sind an den Seitenwänden bzw. an der Bodenfläche fixiert.

Das Einschubmodul kann ferner auch zwischen den Seitenwänden im Aufnahmeraum angeordnete Rückhalteanker mit jeweils einem an der Bodenfläche angebrachten Träger mit seitlich von diesem und im Abstand zur Bodenfläche abstehenden Nasen enthalten.

Das Einschubmodul enthält im Weiteren insbesondere seitlich angeordnete Führungselemente zur Führung des Einschubmoduls in der Längsführung des Modulträgers. Die Führungselemente sind insbesondere als Gleitelemente zur gleitenden Führung des Einschubmoduls in einer Gleitführung ausgebildet. Als Gleitführung ist ganz allgemein eine Linearführung zu verstehen, bei der die verschiedenen Führungselemente nicht durch Wälzkörper ausgebildet werden. Selbstverständlich können die Führungselemente auch Wälzkörper sein, welche entlang der Längsführung abrollen.

Die Führungselemente sind insbesondere aussen an den Seitenwänden des Einschubmoduls angebracht. Sie können beispielsweise als seitlich abstehende Nocken oder Leisten ausgebildet sein.

Das Einschubmodul kann insbesondere schubladenartig in den Modulträger einschiebbar sein.

Das Einschubmodul enthält ferner insbesondere ein erstes Fügeteil zur Ausbildung einer Schnappverbindung mit einem zweiten Fügeteil am Modulträger in der Montageposition. Bei einer Schnappverbindung verformt sich ein Fügeteil elastisch und verhakt anschließend lösbar mit dem anderen Fügeteil. Es liegt also ein Formschluss vor. Das erste Fügeteil enthält insbesondere eine Rastnase. Diese ist z. B. am Endabschnitt einer federelastischen Lasche angebracht.

Rastnase und Lasche bilden einen Schnapphaken aus. Dieser Schnapphaken kann z. B. als Endteil des Einschubmoduls ausgebildet sein. In diesem Endteil können ferner Befestigungsmittel, wie Durchbrüche, zur Befestigung des von hinten über das Endteil in den Aufnahmeraum eingeführten Lichtwellenleiterkabels vorgesehen sein.

Das Front-Panel des Einschubmoduls enthält insbesondere Aufnahmen, z. B. in Form von Durchführungsöffnungen, zur Aufnahme von Ports (Anschlüssen). Dies sind insbesondere lösbare Kupplungsteile, wie Steckanschlüsse, von so genannten "Pigtails". Die Steckanschlüsse können z. B. über Kupplungseinsätze der bereits beschriebenen Art im Front-Panel eingelassen sein.

Ein einzelnes Einschubmodul ist insbesondere zur Aufnahme von ein bis vier Lichtwellenleiterfasern und dementsprechend zur Ausbildung von einem bis vier Ports ausgelegt. Die Verteilereinrichtung ist insbesondere so ausgelegt, dass pro Arbeitsplatz ein Einschubmodul vorgesehen ist.

Da ein Lichtwellenleiterkabel in Bereich der Feinverteilung in der Regel bis vier Lichtwellenleiterfasern enthält, ist insbesondere jeweils einem Lichtwellenleiterkabel ein Einschubmodul zugeordnet.

Dies ist ein wesentlicher Unterschied zu bekannten Lösungen, gemäss welchen ein zusammenhängendes Modul eine grössere Anzahlen von Lichtewellenleiterfasern bzw. - kabel und entsprechend eine grössere Anzahl von Ports für mehrere Arbeitsplätze umfasst. Ist nun ein Lichtwellenleiterfaser bzw. -kabel zu ersetzen oder zu reparieren, so müssen vorgängig die Leitungsverbindungen zu sämtlichen Arbeitsplätzen, welche beim Modul eingehen, unterbrochen und das gesamte Modul ausgebaut werden.

Gemäss vorliegender Erfindung reicht für diese Arbeit der Ausbau eines einzelnen Einschubmoduls, so dass nur ein einzelner Arbeitsplatz von den Wartungsarbeiten betroffen ist. So lässt sich ein einzelnes Einschubmodul für solche Arbeiten schubladenartig aus dem Modulträger herausziehen und nach Abschluss der Arbeiten wieder in den Modulträger einschieben, ohne dass die anderen Einschubmodule im Modulträger und deren Lichtwellenleiterverbindungen betroffen wären.

Das Herausziehen der Modulträger ist möglich, da insbesondere auf der Rückseite des Montagerahmens, wie nachfolgend noch beschrieben, jeweils eine Kabelreserve ausgebildet wird. Die Kabelreserve wird ausgebildet, damit bei einem Defekt am Lichtwellenleiterkabel oder bei einer Änderung der Anschlüsse auf die Kabelreserve zurückgegriffen werden kann und nicht das ganze Kabel ersetzt werden muss.

Gemäss einer Weiterentwicklung der Erfindung ist nun auf der Rückseite des Montagerahmens eine Kabelreserve-Einrichtung angebracht. Die Rückseite entspricht einer der Frontseite abgewandten, rückwärtigen Seite. So kann jedem Modulträger jeweils eine solche Kabelreserve-Einrichtung zugeordnet sein.

Die Kabelreserve-Einrichtung bildet zum Beispiel eine Mehrzahl von Abteilen zur Aufnahme von Kabelreservewindungen auf. Die Abteile, auch Fächer genannt, sind insbesondere zur stehenden Aufnahme von Bündeln von Kabelwindungen ausgelegt. Das heisst, die Bündel von Kabelwindungen liegen nicht sondern stehen in den Abteilen.

Die Abteile sind beispielsweise nebeneinander angeordnet. Die Abteile weisen Abteilböden auf, aufweichen die Kabelreservewindungen stehen.

Die Kabelreserve-Einrichtung kann Abteiltrennelemente, insbesondere Trennwände, auch Abteilwände genannt, aufweisen, welche die einzelnen Abteile voneinander abtrennen. Die Abteiltrennelemente können insbesondere vertikal oder im wesentlichen vertikal ausgerichtet sein. Die Abteiltrennelemente sind beispielsweise entlang der Einschubrichtung der Modulträger ausgerichtet.

Unter Abteiltrennelement ist nicht nur eine Wand zu verstehen. Grundsätzlich sollen unter diesen Begriff jegliche Arten von Trennstrukturen fallen, welche die Ausbildung von Abteilen für Kabelwindungen erlauben. Die Abteiltrennelemente können insbesondere auch Durchbrüche aufweisen.

Die Höhe der Abteile ist beispielsweise wesentlich grösser als deren Breite. Die Tiefe der Abteile ist beispielsweise wesentlich grösser als deren Breite.

Die Kabelreserve-Einrichtung kann so ausgebildet sein, dass für jeweils eine Kolonne von Einschubmodulen ein Aufnahmeabteil vorgesehen ist. Das Abteil fluchtet beispielsweise mit der zugehörigen Kolonne von Einschubmodulen. Enthält der Modulträger beispielsweise zehn Kolonnen von Einschubmodulen, so weist die Kabelreserve-Einrichtung entsprechend zehn Abteile auf.

Ein Aufnahmeabteil kann beispielsweise die Kabelreservewindungen von mehreren oder sämtlichen Lichtwellenleiterkabeln auf, welche jeweils den einzelnen Einschubmodulen einer dem Abteil zugeordneten Kolonne zugeordnet sind.

Auf der dem Modulträger bzw. der Frontseite entgegen gesetzt liegenden Rückseite enthält die Kabelreserve-Einrichtung eine Kabelführungsrinne, auch Kabelführungswanne genannt. Die Kabelführungsrinne dient dem Abfangen und seitlichen umlenken der Kabelreserve.

Die Kabelführungsrinne ist zum Beispiel unter dem Niveau der Aufnahmeabteile bzw. der Abteilböden angeordnet. Die Kabelführungsrinne ist zum Beispiel zur Rückseite hin unmittelbar im Anschluss an die Abteile angeordnet.

Die Kabelführungsrinne verläuft insbesondere quer zu den Aufnahmeabteilen. Die Kabelführungsrinne verläuft insbesondere quer zur Einschubrichtung der Modulträger bzw. der Einschubmodule. Die Kabelführungsrinne ist insbesondere so angeordnet, dass die Lichtwellenleiterkabel von den Kabelwindungsreserven in der Rinne seitlich weggeführt werden.

Die Kabelreserve-Einrichtung kann ein- oder mehrteilig ausgebildet sein. Die Kabelreserve-Einrichtung ist insbesondere als Montageeinheit ausgebildet, welche an entsprechender Stelle am Montagerahmen befestigt werden kann, insbesondere lösbar befestigt werden kann.

Die Kabelreserve-Einrichtung kann aus Metall, wie Stahl oder Aluminium, oder aus Kunststoff gefertigt sein. Die Kabelreserve-Einrichtung kann aus Blech gefertigt sein. Die Kabelreserve-Einrichtung weist zum Beispiel eine Einbautiefe von 180 mm auf. Die Breite kann einer 19 Zoll Normbreite entsprechen. Die Gesamthöhe kann z. B. rund 310 mm betragen.

Die Kabelreserve-Einrichtung erlaubt die geordnete Ausbildung von Käbelreservenwindungen. Insbesondere die stehende Ausrichtung der Kabelwindungen erlaubt eine Platz sparende und trotzdem übersichtliche und ordentliche Unterbringung der Kabelreserve. Dadurch wird ein schneller Zugriff auf die Kabelreserve beispielsweise bei Reparatur- oder Unterhaltsarbeiten gewährleistet.

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1a-c:: ein Anschlusseinschubmodul aus unterschiedlichen perspektivischen Ansichten;
- Figur 2a-b:: das Anschlusseinschubmodul nach Figur la-c mit Verkabelung;
- Figur 3a-b:: das Anschlusseinschubmodul nach Figur 2a-b in Einschubposition bzw. Montageposition;
- Figur 4:: eine Frontansicht einer Verteilereinrichtung, insbesondere eines Verteilerschranks, mit einer Mehrzahl von Baugruppenträger;
- Figur 5a-b:: einen Baugruppenträger mit einer Mehrzahl von Anschlusseinschubmodulen in Montageposition;
- Figur 6a-b:: perspektivische Ansichten einer Kabelreserve-Einrichtung;
- Figur 6c:: ein vergrösserter Ausschnitt aus Figur 6a;
- Figur 7a:: eine Rückseitenansicht einer Verteilereinrichtung, insbesondere eines Verteilerschranks;
- Figur 7b:: eine Seitenansicht eines Ausschnittes einer Verteilereinrichtung, insbesondere eines Verteilerschranks.

Grundsätzlich sind in den Figuren gleiche Teile mit gleichen Bezugszeichen versehen.

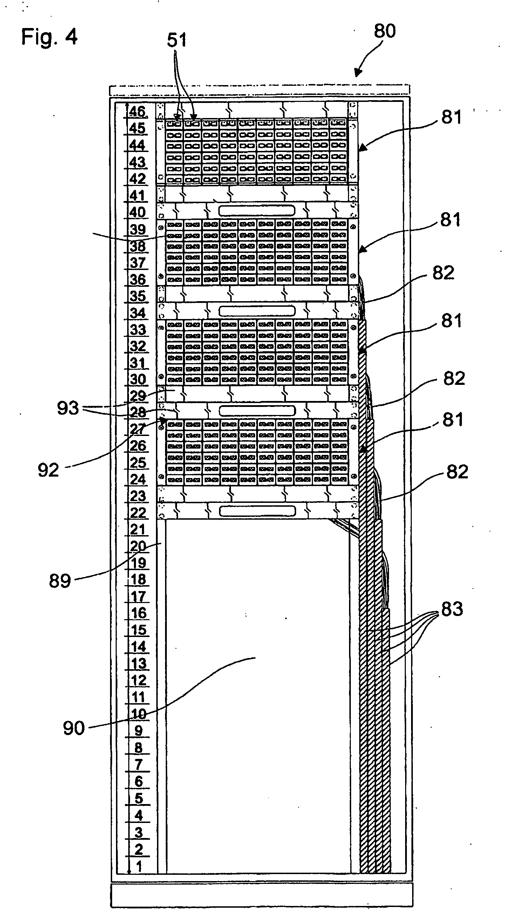

Die Figur 4 zeigt eine Verteilereinrichtung 80 zur Herstellung einer Rangierung durch Verbinden von Lichtwellenleiterfasern eines eingehenden Lichtwellenleiterkabels mit Lichtwellenleiterfasern eines ausgehenden Lichtwellenleiterkabels. Die Verteilereinrichtung 80 weist hierbei eine Frontseite 92 mit einer Mehrzahl von Ports 86 zur Herstellung lösbarer Leitungsverbindungen auf.

Die Verteilereinrichtung 80 umfasst einen Montagerahmen 89. Der Montagerahmen 89 bildet einen Aufnahmeraum 90 für eine Mehrzahl von Modulträgern 81 aus. Die Modulträger 81 sind im Montagerahmen 89 übereinander angeordnet und über Schraubverbindungen am Montagerahmen 89 befestigt.

Die übereinander angeordneten Modulträger 81 sind über an der Frontseite 92 angebrachte Rangierpanele 93 voneinander vertikal beabstandet. Die Rangierpanele 93 können Kabelhalterungen (nicht gezeigt) aufnehmen und Kabeldurchführungen enthalten. Die Rangierpanele 93 weisen eine Höhe von einer Höheneinheit auf.

Die auf der linken Seite der Verteilereinrichtung 80 durch horizontale Striche zwischen der angegebenen Numerierung dargestellten Höhenabschnitte entsprechen jeweils einer Höheneinheit.

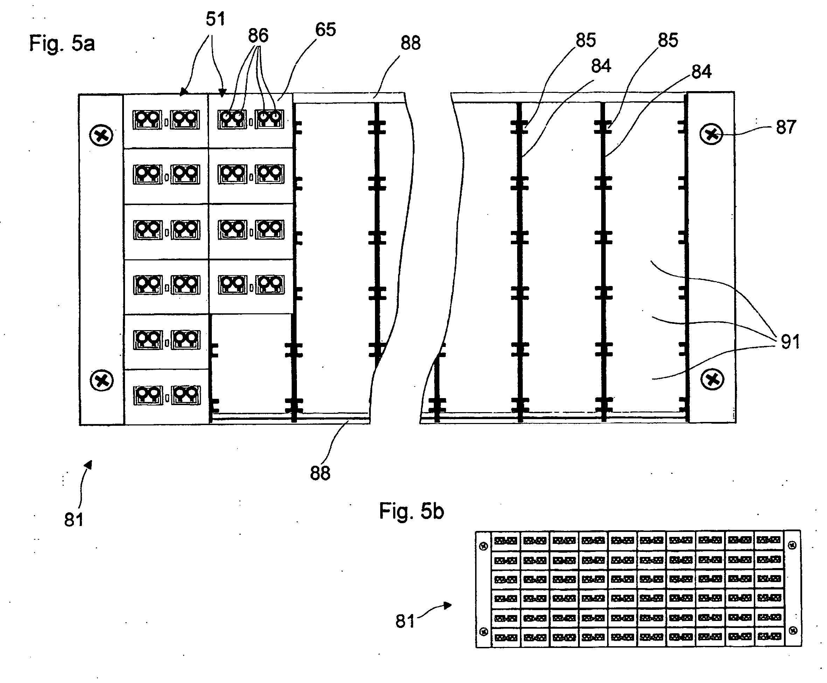

Jeder Modulträger 81 nimmt eine Mehrzahl von Einschubmodulen 51 auf (siehe Figur 5a und 5b). Die Einschubmodule 51 sind im vorliegenden Ausführungsbeispiel in sechs, übereinander angeordneten horizontalen Reihen im Modulträger 81 montiert. Jede Reihe enthält zehn Einschubmodule 51. Der Modulträger 81 umfasst somit insgesamt sechs mal zehn, also sechzig Einschubmodule 51. Eine Kolonne umfasst entsprechend sechs Einschubmodule 51. Entsprechend enthält der Modulträger 81 insgesamt neun vertikale Zwischenwände 84.

Der Modulträger 81 bildet hierzu eine entsprechende Anzahl von Aufnahmen 91 aus.

Der Modulträger 81 ist rechteckförmig bzw. kastenförmig ausgebildet. Der Modulträger 81 enthält eine Mehrzahl von nebeneinander in Abstand zueinander angeordnete, vertikal ausgerichtete Wände 84. Zwischen zwei vertikalen Wänden 84 werden jeweils die Aufnahmen 91 für eine Mehrzahl von in einer Kolonne übereinander angeordneten Einschubmodule 51 ausgebildet. An den vertikalen Wänden 84 sind horizontale Gleitführungen 85 in Form von Führungskanälen vorgesehen.

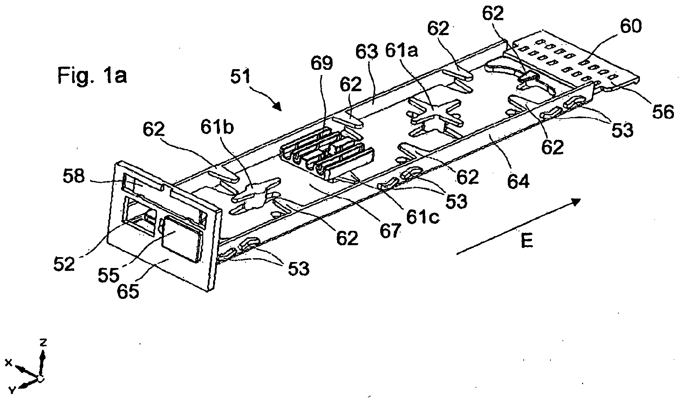

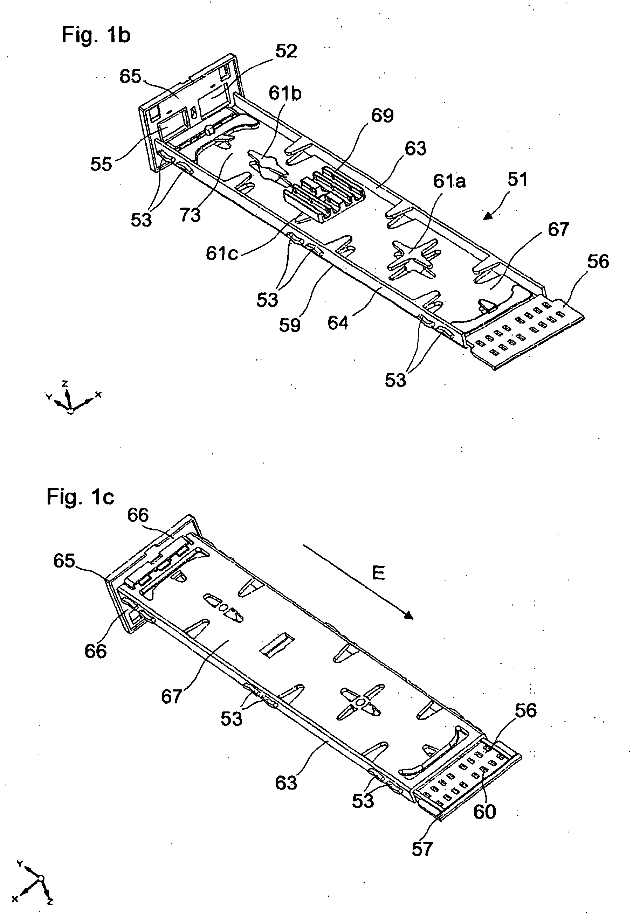

Das einzelne Einschubmodul 51 enthält einen Grundkörper 59, ein Front-Panel 65 zur Aufnahme der Ports 86, eine Spleissschutzhalterung 69 zur Aufnahme der Spleissverbindungen zwischen den Lichtwellenleitern, sowie einen Aufnahmeraum 73 zur Aufnahme einer Lichtwellenleiter-Reserve 72a, 72b (siehe Figur 1a bis 1c).

Der Grundkörper 59 enthält einen Boden 67, sowie eine erste und zweite Seitenwand 63, 64, welche parallel zur Einschubrichtung E verlaufen. Der Boden 67, die Seitenwände 63, 64 und das Front-Panel 65 begrenzen den kanalförmigen und in Montageposition gegen oben offenen Aufnahmeraum 73.

Die Spleissschutzhalterung 69 ist drehbar am Grundkörper 59 gehaltert. Die Drehachse liegt senkrecht zur Einschubrichtung E und senkrecht zum Boden 67. Die Drehbarkeit erlaubt die Ausrichtung der Spleissschutzhalterung 69 in einer Ebene, welche parallel zu den Windungen der Lichtwellenleiter-Reserve 72a, 72b liegt.

Das Front-Panel 65 ist als separates Bauteil ausgebildet und in Einschubrichtung E über eine Formschlussverbindung mit dem Grundkörper 59 verbunden.

Das Einschubmodul 51 weist ferner zungenförmige Rückhalteelemente 62, welche im Abstand zum Boden über den Aufnahmeraum 73 geführt sind. Die Rückhalteelemente 62 sollen ein Entweichen der Lichtwellenleiter-Reserve 72a, 72b nach oben durch die Aufnahmeöffnung verhindern. Die Rückhalteelemente 62 sind an den Seitenwänden 63, 64 bzw. an der Bodenfläche 67 fixiert. Das Einschubmodul 51 enthält im Weiteren auch Rückhalteanker 61a, 61b mit jeweils einem an der Bodenfläche 67 angebrachten Träger mit seitlich von diesem und im Abstand zur Bodenfläche 67 abstehenden Rückhaltezungen.

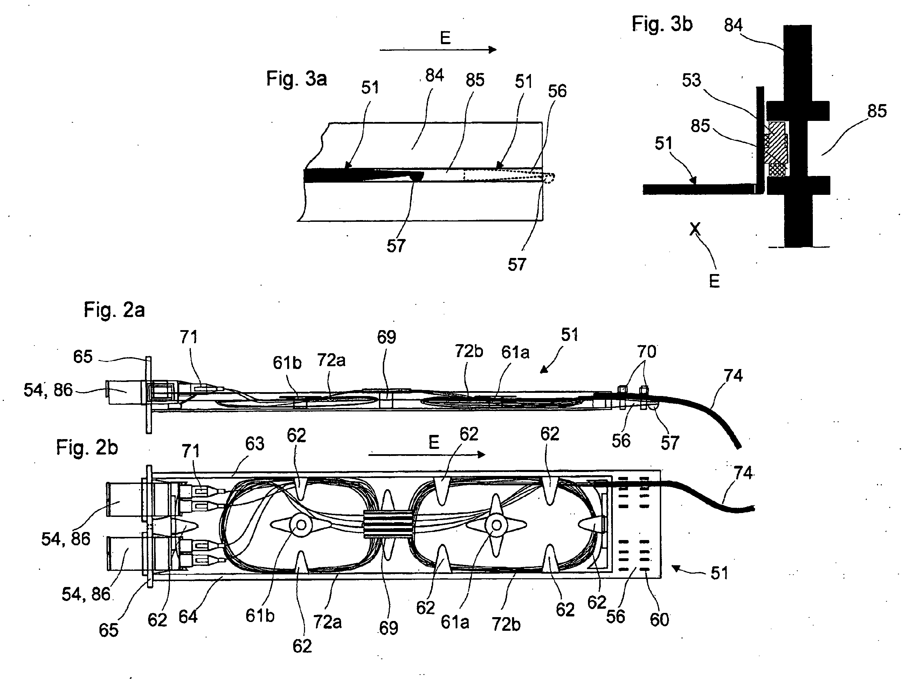

Das Einschubmodul 51 enthält aussen an den Seitenwänden 63, 64 angebrachte Gleitführungselemente 53 zur Führung des Einschubmoduls 51 in den Führungskanälen 85 des Modulträgers 81 (siehe auch Figur 3b). Die Gleitführungselemente 53 sind in Form von paarweise hintereinander angeordneten und im Paar jeweils gegenläufig gebogenen leistenförmigen Vorsprüngen ausgebildet.

Das Einschubmodul 51 enthält in Einschubrichtung E in der Verlängerung des Bodens 67 ein dem Front-Panel 65 gegenüber angeordnetes ein Endteil 56. Auf der Unterseite des Endteils 56 ist eine Rastnase 57 angeordnet. Das Endteil 56 ist in Form einer federelastischen Lasche ausgebildet und bildet in der Montageposition zusammen mit der Rastnase 57 Teil einer Formschlussverbindung mit dem Modulträger 81. Das Endteil 56 und die Rastnase 57 bilden eine Art Schnapphaken aus.

Beim Einführen des Einschubmoduls in die Aufnahme 91 des Modulträgers 81 ist das Endteil 56 unter Vorspannung im FührungsKanal 85 geführt. Bei Erreichen der Endlage wird die Rastnase 57 über das hintere. Ende des Führungskanals 85 hinausgeschoben. Das Endteil 56 entspannt sich und die Rastnase 57 wird nach unten unterhalb der Gleitfläche des Führungskanals 85 gedrückt und rastet ein (siehe auch Figur 3a). Dadurch wird ein sicherer Halt des Einschubmoduls 51 im Modulträger 81 erreicht. Das heisst, das Einschubmodul 51 kann z. B. nicht selbsttätig entgegen der Einschubrichtung E herausgleiten.

Die Schnappverbindung kann zur Entnahme des Einschubmoduls 51 aus der Aufnahme durch Anwendung einer Zugkraft entgegen der Einschubrichtung E und gegebenenfalls unter Wegbiegen des elastischen Endteils 56, von Hand oder mit Hilfe eines Werkzeuges, wieder gelöst werden.

Das Front-Panel 65 enthält Durchgangsöffnungen 52, zur Aufnahme von Ports 86. Die Ports 86 liegen in Form von Steckanschlüssen 54 vor.

Das Einschubmodul 51 gemäss vorliegendem Ausführungsbeispiel ist zur Aufnahme von vier Lichtwellenleiterfasern und dementsprechend zur Ausbildung von vier Ports 86 ausgelegt. Jede der beiden Durchgangsöffnungen 52 bildet daher eine Aufnahme für zwei Ports 86, bzw. für zwei Steckanschlüsse 54 aus. Die vier Ports sind für einen Arbeitsplatz bzw. für eine Anschlussdose im Gebäude ausgelegt.

Im Beispiel nach Figur la-lc wird eine der Durchgangsöffnungen 52 nicht benutzt und ist daher mit einem Blinddeckel 55 abgedeckt.

Das mehrfasrige Lichtwellenleiterkabel 74 ist aus der Richtung des Endteils 56 entgegen der Einschubrichtung E in den Aufnahmeraum 73 des Einschubmoduls 51 eingeführt. Das Endteil 56 weist eine Vielzahl von Durchbrüchen 60 auf. Durch solche Durchbrüche 60 sind Kabelbinder 70 geführt, über welche das Lichtwellenleiterkabel 74 am Endteil 56 fixiert ist.

Vom eingeführten und entmantelten Lichtwellenleiterkabel 74 ist eine Lichtwellenleiter-Reserve 72b angelegt, welche vom Front-Panel 65 aus in Einschubrichtung E betrachtet im hinteren Bereich des Aufnahmeraums 73 schlaufenförmig abgelegt ist und durch die Rückhalteelemente 62 und den Rückhalteanker 61a vor dem Herausgleiten bewahrt wird (siehe Figur 2a, 2b).

Die Enden der Lichtwellenleiterfasern des entmantelten Lichtwellenleiterkabels 74 sind mit den Enden der Lichtwellenleiterfasern korrespondierender, vorkonfektionierter Steckanschlüsse 54 (Pigtails) gespleisst. Die Spleissungen sind in schlitzförmigen Öffnungen der Spleissschutzhalterung 69 klemmend abgelegt.

Von den Lichtwellenleiterfasern der vorkonfektionierten Steckanschlüsse 54 ist eine Lichtwellenleiterfaser-Reserve 72a angelegt, welche vom Front-Panel 65 aus in Einschubrichtung E betrachtet im vorderen Bereich des Aufnahmeraums 73 schlaufenförmig abgelegt ist und durch die Rückhalteelemente 62 und den Rückhalteanker 61ba vor dem Herausgleiten bewahrt werden.

Die Windungen der Lichtwellenleiterfaser-Reserven 72a, 72b liegen in derselben Ebene. Diese Ebene ist parallel zur Einschubrichtung E und zum Boden 67.

Das Anlegen einer Lichtwellenleiterfaser-Reserve 72a, 72b erlaubt das Spleissen der Verbindungen ausserhalb des Modulträgers 81, bzw. ausserhalb der Montageposition des Einschubmoduls 51 sowie ausserhalb des Aufnahmeraums 73 des Einschubmoduls 51. Ferner erlaubt die Lichtwellenleiterfaser-Reserve 72a, 72b die Reparatur einer defekten Spleissung oder den Austausch eines vorkonfektionierten Steckanschlusses, ohne dass ein Lichtwellenleiterkabel 74 ausgetauscht werden muss.

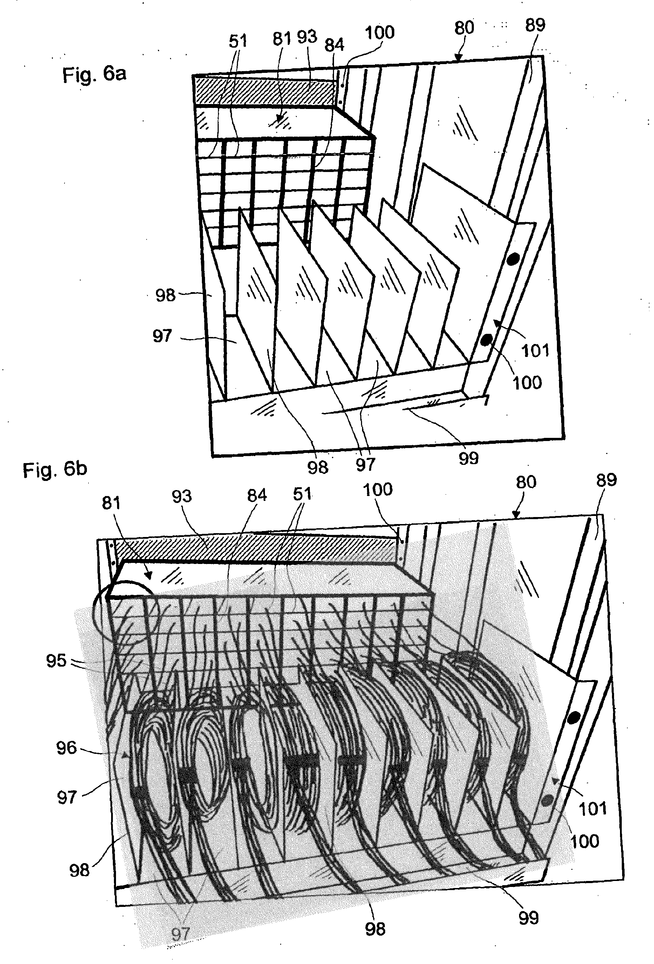

Die Figur 6a zeigt einen Teilausschnitt einer Kabelreserve-Einrichtung 94. Die Figur 6b zeigt einen etwas grösseren Teilausschnitt der Kabelreserve-Einrichtung 94 mit den ausgebildeten Kabelreservewindungen 96.

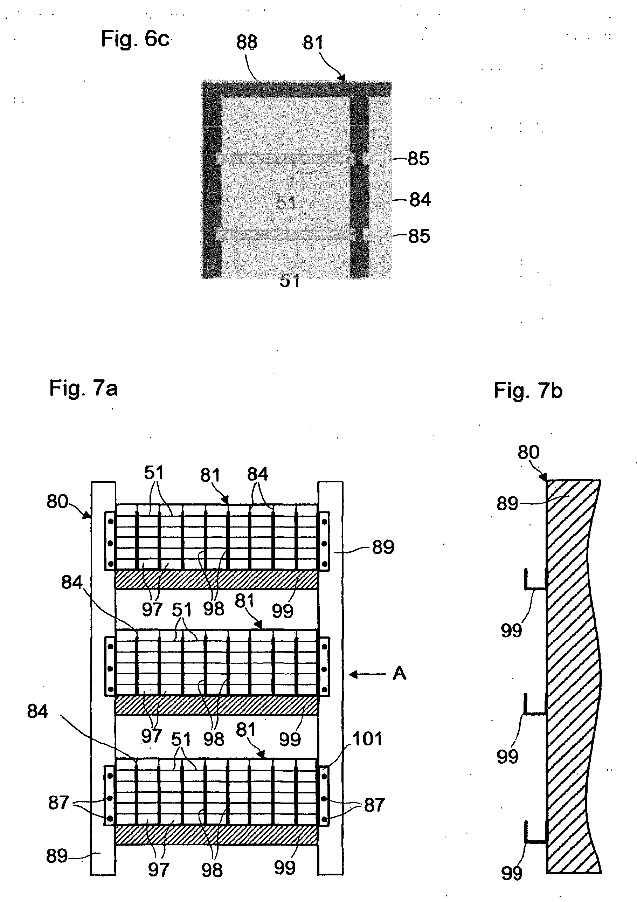

Die Figur 7a zeigt eine Frontalansicht auf die Rückseite der Verteilereinrichtung 80 mit einer Kabelreserve-Einrichtung 94 gemäss Figur 6a. Die Figur 7b zeigt eine Seitenansicht vom rückwärtigen Bereich der Verteilereinrichtung 80, in welcher die rückseitig vorstehende Kabelführungsrinne 99 gut sichtbar ist.

Die Kabelreserve-Einrichtung 94 ist an der Rückseite einer Verteilereinrichtung 80 angebracht. Die Kabelreserve-Einrichtung 94 ist einem Modulträger 81 zugeordnet. Der Modulträger 81, welcher eine Mehrzahl von Anschlusseinschubmodulen 51 enthält, ist in der Verteilereinrichtung 80 von der Frontseite betrachtet vor der Kabelreserve-Einrichtung 94 angeordnet. Mehrere übereinander angeordnete Modulträger 81 sind über Rangierpanele 93 voneinander beabstandet angeordnet.

Der Modulträger 81 enthält zehn Kolonnen mit jeweils sechs Anschlusseinschubmodulen 51. Dies ergibt sechs Reihen mit jeweils zehn Anschlusseinschubmodulen 51.

Die Kabelreserve-Einrichtung 94 ist über Befestigungsflansche 101 mittels Befestigungsmittel 100, wie Schrauben, als Moduleinheit am Montagerahmen der Verteilereinrichtung angebracht.

Die Kabelreserve-Einrichtung 94 bildet zehn nebeneinander angeordnete Abteile 97 zur stehenden Aufnahme von Bündeln von Kabelreservewindungen 96 auf. Die Abteile 97 sind über Abteilwände 98 voneinander getrennt. Die Höhe sowie die Tiefe der Abteile 97 ist wesentlich grösser als deren Breite.

Die Kabelreserve-Einrichtung 94 ist so ausgebildet, dass jeweils einer Kolonne von sechs Einschubmodulen 51 ein Aufnahmeabteil 97 zugeordnet ist. Die Aufnahmeabteile 97 fluchten dabei jeweils mit der zugehörigen Kolonne von Einschubmodulen 51. Ein Aufnahmeabteil 97 nimmt folglich die Kabelreservewindungen 96 von sechs Lichtwellenleiterkabeln 95 auf. Die Lichtwellenleiterkabel 95 sind von der Rückseite in den Modulträger 81 zu den einzelnen, in den Modulträger 81 eingeschobenen Anschlusseinschubmodulen 51 geführt.

Auf der dem Modulträger 81 entgegen gesetzt liegenden Rückseite enthält die Kabelreserve-Einrichtung 94 eine Kabelführungsrinne 99. Die Kabelführungsrinne 99 ist unter dem Niveau der Aufnahmeabteile 97 bzw. der Abteilböden angeordnet. Die Kabelführungsrinne 99 ist zur Rückseite hin unmittelbar im Anschluss an die Aufnahmeabteile 97 angeordnet. Die Kabelführungsrinne 99 verläuft dabei quer zu den Aufnahmeabteilen 97 und quer zur Einschubrichtung der Modulträger 81 bzw. der Einschubmodule 51. Die Kabelführungsrinne 99 ist so angeordnet, dass die Lichtwellenleiterkabel 95 von den Kabelreservewindungen 96 in den Abteilen 97 rückseitig aus den Abteilen 97 in die Kabelführungsrinne 99 geführt und in der Kabelfiihrungsrinne 99 quer zu den Abteilen 97 zur Seite der Verteilereinrichtung 80 weggeführt werden.

Die Figur 6c zeigt einen Ausschnitt aus dem rückseitigen Bereich des Modulträgers 81 gemäss Figur 6a und 6b. Dor Modulträger 81 ist kastenförmig ausgebildet und enthält abschliessende Horizontalelemente 88. Ferner umfasst der Modulträger 81 Vertikalelemente 84 in Form von Wandelementen mit Längsführungen 85 in Form von Führungsnuten. Die Anschlusseinschubmodul 51 sind über die Führungsnuten in den Modulträger 81 eingeschoben. Die hier gezeigten wandartigen Vertikalelemente 84 mit integrierten Führungsnuten 85 sind als beispielhafte Ausführungsvariante zu den Vertikalelementen gemäss Figur 5a gedacht.

## Patentansprüche

1. Einrichtung zur Verteilung von Kommunikations- und Datenleitungen in einem Gebäude mit einer Kabelverbindung und einer Anschlussdose und mit einem Gebäudeverteiler (80) zur Herstellung einer Rangierung und Verteilung der Kommunikations- und Datenleitungen im Gebäude durch Verbinden von Lichtwellenleiterfasern eines eingehenden Lichtwellenleiterkabels mit Lichtwellenleiterfasern eines ausgehenden Lichtwellenleiterkabels, enthaltend:
- eine Frontseite (92) mit einer Mehrzahl von Ports (86) zur Herstellung lösbarer Leitungsverbindungen;
- einen Montagerahmen (89);
- wenigstens einen im Montagerahmen (89) befestigen Modulträger (81) mit einer Mehrzahl von Aufnahmen (91) für Einschubmodule (51);
- eine Mehrzahl von in die Aufnahmen (91) des Modulträgers (81) eingeführte Einschubmodule (51) mit jeweils wenigstens einem Port (86),
wobei der Modulträger (81) kastenförmig ausgebildet ist und eine Mehrzahl von übereinander und nebeneinander angeordnete Aufnahmen (91) zur Aufnahme jeweils eines Einschubmoduls (51) ausbildet, und in den Aufnahmen (91) eine Mehrzahl von über Führungen (85) übereinander und nebeneinander angeordnete Einschubmodule (51) eingeführt sind, derart, dass sich jeweils ein einzelnes Einschubmodul schubladenartig aus dem Modulträger (81) herausziehen und wieder in den Modulträger (81) einschieben lässt,
und die Einschubmodule (51) pro Arbeitsplatz und zur Aufnahme von ein bis vier Lichtwellenleiterfasern ausgelegt sind und jeweils einen Grundkörper, ein Front-Panel (65) zur Aufnahme von einem bis vier Ports (86), eine Spleissschutzhalterung (69) zur Aufnahme der Spleissverbindungen zwischen den Lichtwellenleitern, sowie einen Aufnahmeraum (73) zur Aufnahme einer Lichtwellenleiter-Reserve (72a, 72b) enthält, und die Einschubmodule (51) auf der Rückseite der Ports (86) jeweils die Kabelverbindung zu der fest installierten Anschlussdose im Gebäude herstellen.

2. Einrichtung nach Anspruch 1, **gekennzeichnet durch** eine Mehrzahl von übereinander im Montagerahmen (89) befestigten Modulträger (81).

3. Einrichtung nach einem der Ansprüche 1 bis 2, **dadurch gekennzeichnet, dass** der Montagerahmen (89) und der wenigstens eine Modulträger (81) eine Längsführung zum Einschieben des Modulträgers (81) in den Montagerahmen (89) ausbilden.

4. Einrichtung nach einem der Ansprüche 1 bis 3, **dadurch gekennzeichnet, dass** der wenigstens eine Modulträger (81) und die Einschubmodule (51) Längsführungen zum Einschieben der Einschubmodule (51) in den Modulträger (81) ausbilden.

5. Einrichtung nach einem der Ansprüche 1 bis 4, **dadurch gekennzeichnet, dass** der Aufnahmeraum (73) zur Aufnahme einer Lichtwellenleiter-Reserve (72a, 72b) in der Montageposition gegen oben offen ist.

6. Einrichtung nach einem der Ansprüche 1 bis 5, **dadurch gekennzeichnet, dass** das Einschubmodul (51) Rückhalteelemente (62), insbesondere Nasen, Zungen oder Stifte, enthält, welche im Abstand zum Boden des Einschubmoduls (51) über den Aufnahmeraum (73) geführt sind und ein Entweichen der Lichtwellenleiter-Reserve (72a, 72b) nach oben durch eine Aufnahmeöffnung verhindern sollen.

7. Einrichtung nach einem der Ansprüche 1 bis 6, **dadurch gekennzeichnet, dass** auf einer der Frontseite (92) gegenüber liegenden Rückseite des Montagerahmens (89) eine Kabelreserve-Einrichtung (94) angeordnet ist.

8. Einrichtung nach Anspruch 7, **dadurch gekennzeichnet, dass** die Kabelreserve-Einrichtung (94) eine Mehrzahl von Abteilen (97) zur Aufnahme von Kabelreservewindungen (96) ausbildet, wobei die Abteile (97) zur stehenden Aufnahme von Kabelreservewindungen (96) ausgelegt sind.

9. Einrichtung nach einem der Ansprüche 7 bis 8, **dadurch gekennzeichnet, dass** die Abteile (97) der Kabelreserve-Einrichtung (94) vertikal ausgerichtet sind.

10. Einrichtung nach einem der Ansprüche 7 bis 9, **dadurch gekennzeichnet, dass** die Kabelreserve-Einrichtung (94) Abteiltrerinelemente (98), insbesondere Trennwände enthält, welche die einzelnen Abteile (97) voneinander abtrennen.

11. Einrichtung nach Anspruch 10, **dadurch gekennzeichnet, dass** die Abteiltrennelemente (98) vertikal ausgerichtet sind.

12. Einrichtung nach einem der Ansprüche 10 bis 11, **dadurch gekennzeichnet, dass** die Abteiltrennelemente (98) entlang der Einschubrichtung der Modulträger (81) ausgerichtet sind.

13. Einrichtung nach einem der Ansprüche 7 bis 12, **gekennzeichnet durch** eine Kabelführungsrinne (99), welche auf der Rückseite der Kabelreserve-Einrichtung (94) angeordnet ist und quer zu den Abteilen (97) verläuft.

14. Einrichtung nach Anspruch 13, **dadurch gekennzeichnet, dass** die Kabelführungsrinne (99) unter dem Niveau der Abteilböden der Abteile (97) angeordnet ist.

## Claims

1. A device for distributing communication and data leads in a building, with a cable connection and a connection socket and with a building distributor (89) for creating a routing and distribution of communication and data leads in the building by way of connecting fibre optic fibres of an incoming fibre optic cable to fibre optic fibres of an outgoing fibre optic cable, comprising:
- a front side (92) with a plurality of ports (86) for creating releasable lead connections;
- an assembly frame (89);
- at least one module carrier (81) which is fastened in the assembly frame (89) and which is with a plurality of receivers (91) for insert modules (51);
- a plurality of insert modules (51) which are inserted into the receivers (91) of the module carrier (81) and are each with at least one port (86),
wherein the module carrier (81) is designed in a box-like manner and forms a plurality of receivers (91) which are arranged above one another and next to one another, for each receiving an insert module (51), and a plurality of insert modules (51) which are arranged above one another and next to one another via guides (85) are inserted in the receivers (91) in a manner such that an individual insert module can be withdrawn from the module carrier (81) and inserted again into the module carrier (81) in the manner of a drawer,
and the insert modules (51) are designed per workspace and for receiving one to four fibre optic fibres and each comprise a base body, a front panel (65) for receiving one to four ports (86), a splicing protection holder (69) for receiving the splice connections between the fibre optics, as well as a receiving space (73) for receiving a fibre optic reserve (72a, 72b), and the insert modules (51) on the rear side of the port (86) each create the cable connection to the fixedly installed connection socket in the building.

2. A device according to claim 1, **characterised by** a plurality of module carriers (81) which are fastened above one another in the assembly frame (89).

3. A device according to one of the claims 1 to 2, **characterised in that** the assembly frame (89) and the at least one module carrier (81) form a longitudinal guide for inserting the module carrier (81) into the assembly frame (89).

4. A device according to one of the claims 1 to 3, **characterised in that** the at least one module carrier (81) and the insert modules (51) form longitudinal guides for inserting the insert modules (51) into the module carrier (81).

5. A device according to one of the claims 1 to 4, **characterised in that** the receiving space (73) for receiving a fibre optic reserve (72a, 72b) is open to the top in the assembly position.

6. A device according to one of the claims 1 to 5, **characterised in that** the insert module (51) comprises retaining elements (62), in particular lugs, tongues or pins which are led at a distance to the base of the insert module (51) over the receiving space (73) and are to prevent the escape of the fibre-optic reserve (72a, 72b) to the top through a receiving opening.

7. A device according to one of the claims 1 to 6, **characterised in that** a cable reserve device (94) is arranged on a rear side of the assembly frame (89) which lies opposite the front side (92).

8. A device according to claim 7, **characterised in that** the cable reserve device (94) forms a plurality of compartments (97) for receiving cable reserve windings (96), wherein the compartments (97) are designed for the standing receiving of cable reserve windings (96).

9. A device according to one of the claims 7 to 8, **characterised in that** the compartments (97) of the cable reserve device (94) are aligned vertically.

10. A device according to one of the claims 7 to 9, **characterised in that** the cable reserve device (94) comprises compartment separating elements (98) in particular separating walls, which separate the individual compartments (97) from one another.

11. A device according to claim 10, **characterised in that** the compartment separating elements (98) are aligned vertically.

12. A device according to one of the claims 10 to 11, **characterised in that** the compartment separating elements (98) are aligned along the insert direction of the module carrier (81).

13. A device according to one of the claims 7 to 12, **characterised by** a cable guidance channel (99) which is arranged on the rear side of the cable reserve device (94) and runs transversely to the compartments (97).

14. A device according to claim 13, **characterised in that** the cable guidance channel (99) is arranged below the level of the compartment bases of the compartments (97).

## Revendications

1. Dispositif de répartition de lignes de communication et de données dans un bâtiment, le dispositif présentant une liaison par câble, un boîtier de raccordement et un répartiteur (80) de bâtiment qui établit un classement et une répartition des lignes de communication et de données dans le bâtiment en reliant des fibres de conducteurs d'ondes lumineuses d'un câble entrant de conducteurs d'ondes lumineuses à des fibres de conducteurs d'ondes lumineuses d'un câble sortant de conducteurs d'ondes lumineuses, le dispositif contenant:
- un côté frontal (92) doté de plusieurs ports (86) permettant d'établir des liaisons libérables entre les lignes,
- un bâti de montage (89),
- un ou plusieurs supports (81) de module fixés dans le bâti de montage (89) et présentant plusieurs logements (91) pour modules enfichables (51),
- plusieurs modules enfichables (51) insérés dans les logements (91) du support (81) de module et dotés chacun d'un ou plusieurs ports (86),
le support (81) de module étant configuré sous la forme d'une armoire et formant des logements (91) disposés les uns au-dessus des autres et les uns à côté des autres, chacun pour loger un module enfichable (51), plusieurs modules enfichables (51) étant disposés les uns au-dessus des autres et les uns à côté des autres étant insérés dans les logements (91) à l'aide de guides (85) de telle sorte que chaque module enfichable puisse être sorti hors du support (81) de module et réinséré dans le support (81) de module à la manière d'un tiroir,
les modules enfichables (51) étant conçus par place te travail et pour loger d'une à quatre fibres de conducteurs d'ondes lumineuses et contenant chacun un corps de base, un panneau frontal (65) qui reprend un à quatre ports (86), un support (69) de protection d'épissure qui loge des épissures de liaison des conducteurs d'ondes lumineuses ainsi qu'un espace de réception (73) qui loge une réserve (72a, 72b) de conducteur d'ondes lumineuses, chacun des modules enfichables (51) établissant sur le côté arrière du port (86) la liaison par câble avec le boîtier de raccordement installé fixement dans le bâtiment.

2. Dispositif selon la revendication 1, **caractérisé par** plusieurs supports (81) de module fixés les uns au-dessus des autres dans le bâti de montage (89).

3. Dispositif selon l'une des revendications 1 et 2, **caractérisé en ce que** le bâti de montage (89) et le ou les supports (81) de module forment un guide longitudinal permettant d'insérer le support (81) de module dans le bâti de montage (89).

4. Dispositif selon l'une des revendications 1 à 3, **caractérisé en ce que** le ou les supports (81) de module et les modules enfichables (51) forment des guides longitudinaux permettant d'insérer les modules enfichables (51) dans le support (81) de module.

5. Dispositif selon l'une des revendications 1 à 4, **caractérisé en ce que** l'espace de réception (73) qui loge une réserve (72a, 72b) de conducteur d'ondes lumineuses est ouvert vers le haut en position de montage.

6. Dispositif selon l'une des revendications 1 à 5, **caractérisé en ce que** le module enfichable (51) contient des éléments de retenue (62), notamment des becs, de pattes ou des tiges qui s'étendent dans l'espace de réception (73) à distance du fond du module enfichable (51) et qui servent à empêcher que la réserve (72a, 72b) de conducteur d'ondes lumineuses s'échappe vers le haut par une ouverture de réception.

7. Dispositif selon l'une des revendications 1 à 6, **caractérisé en ce qu'**un dispositif (94) de réserve de câble est disposé sur le côté arrière, situé face au côté frontal (92), du bâti de montage (89).

8. Dispositif selon la revendication 7, **caractérisé en ce que** le dispositif (94) de réserve de câble forme plusieurs compartiments (97) qui logent des enroulements (96) de réserve de câble, les compartiments (97) étant conçus pour loger debout les enroulements (96) de réserve de câble.

9. Dispositif selon l'une des revendications 7 et 8, **caractérisé en ce que** les compartiments (97) du dispositif (94) de réserve de câble sont orientés à la verticale.

10. Dispositif selon l'une des revendications 7 à 9, **caractérisé en ce que** le dispositif (94) de réserve de câble contient des éléments de séparation (98), notamment des cloisons de séparation, qui séparent les uns des autres les différents compartiments (97).

11. Dispositif selon la revendication 10, **caractérisé en ce que** les éléments (98) de séparation des compartiments sont orientés à la verticale.

12. Dispositif selon l'une des revendications 10 et 11, **caractérisé en ce que** les éléments (98) de séparation des compartiments sont orientés dans la direction d'enfichage des supports (81) de module.

13. Dispositif selon l'une des revendications 7 à 12, **caractérisé par** une goulotte (99) de guidage de câble disposée sur le côté arrière du dispositif (94) de réserve de câble et s'étendant transversalement par rapport aux compartiments (97).

14. Dispositif selon la revendication 13, **caractérisé en ce que** la goulotte (99) de guidage de câble est disposée en dessous du niveau du fond des compartiments (97) .
